# EUROPÄISCHE PATENTANMELDUNG

(11) **EP 1 860 073 A1**
(43) Veröffentlichungstag der Anmeldung: **28.11.2007**
(21) Anmeldenummer: 07010515.0
(22) Anmeldetag: 25.05.2007
(51) Int. Cl.: C02F 3/12, G01F 23/14

(54) **Verfahren zum Betrieb eines Drucklufthebersystems für eine Kleinkläranlage und Drucklufthebersystem**

(30) Priorität: 26.05.2006 DE 102006024717
(71) Anmelder: Zapf Wassersysteme GmbH, 95448 Bayreuth (DE)
(72) Erfinder: Schütz, Waldemar, 95445 Bayreuth (DE)
(74) Vertreter: Spranger, Stephan

(57) **Zusammenfassung**

Die Erfindung betrifft ein Verfahren zum Betrieb eines Drucklufthebersystems für eine Kleinkläranlage, wobei ein Flüssigkeitsfüllstand in einem Behälter mit einem Druckluftheber (1) veränderbar ist, die folgende Schritte aufweist:
Aufbau einer Verbindung einer Druckluftquelle (6) und einer Druckluftzufuhrleitung (3) zu dem Druckluftheber;
Druckaufbau in dem System, bestehend aus der Druckluftzufuhrleitung (3) und dem Druckluftheber (1) durch die Druckluftquelle (6);
Abtrennen der Druckluftquelle (6) von dem System;
Bestimmung des Drucks in dem System durch einen Drucksensor (7);
Vergleich des von dem Drucksensor bestimmten Drucks mit einem vorbestimmten Referenzdruck, welcher ein Maß für den hydrostatischen Druck einer Flüssigkeitssäule über einem Anschluss der Druckluftzufuhrleitung an dem Druckluftheber ist, durch eine Druckluftsteuerung (8), wobei der Flüssigkeitsfüllstand in dem Behälter bestimmt wird.

Die Erfindung betrifft außerdem ein entsprechendes Drucklufthebersystem, welches insbesondere zur Verwendung mit erfindungsgemäßen Verfahren vorgesehen ist.

## Beschreibung

Die Erfindung betrifft ein Verfahren zum Betrieb eines Drucklufthebersystems für eine Kleinkläranlage, wobei ein Flüssigkeitsfüllstand in einem Behälter mit einem Druckluftheber veränderbar ist gemäß dem Oberbegriff des Anspruchs 1. Ferner betrifft die Erfindung ein entsprechendes Drucklufthebersystem für eine Kleinkläranlage mit einem Druckluftheber, mit welchem ein Flüssigkeitsfüllstand in zumindest einem Behälter der Kleinkläranlage veränderbar ist und einer Druckluftzufuhrleitung, welche an einen Anschluss des Drucklufthebers angeschlossen ist und welche über ein Ventil mit einer Druckluftquelle verbunden ist gemäß dem Oberbegriff des Anspruchs 6.

Die Erfindung ist allgemein anwendbar bei Kleinkläranlagen, welche beispielsweise nach dem SBR-Verfahren arbeiten, wobei SBR für Sequencing Batch Reactor steht.

Generell kommen in letzter Zeit im Zusammenhang mit gesteigerten Umweltauflagen vermehrt Kleinkläranlagen zum Einsatz, welche dezentral das Abwasser einzelner, allein stehender Häuser oder kleinerer bis mittlerer Betriebe reinigen können, die nicht an eine zentrale Abwasserentsorgung angeschlossen sind. Solche Kleinkläranlagen arbeiten häufig nach dem SBR-Verfahren. Bei solchen Kleinkläranlagen besteht jedoch immer die Problematik, dass aufgrund ihrer dezentralen Ausführung die Anlagensteuerung zum einen möglichst automatisch und zum anderen möglichst zuverlässig und wenig fehleranfällig erfolgen sollte, da - wie oben erwähnt - ein Großteil der Anwender solcher Kleinkläranlagen Privathaushalte sind bzw. Personengruppen, welche keine professionelle Kläranlagenüberwachung zur Verfügung haben.

Die Kleinkläranlagen des Standes der Technik werden entweder nach einem fest eingestellten Zeitplan je nach Ausbaugröße und theoretischem Abwasseranfall oder nach dem tatsächlichen Abwasseranfall gesteuert. Insbesondere letztere Kleinkläranlagen des Standes der Technik benötigen somit vielfältige Druck-, Regel- und Sensortechnik, wobei es mit solcher Technik hinsichtlich der Zuverlässigkeit zu Problemen kommen kann, weil diese sensiblen Bauteile häufig auch mit dem Abwasser in Berührung kommen. Häufig sind die komplexen Rohrleitungs-, Pumpen-, Sensor- und Regelungsanordnungen solcher Kleinkläranlagen aufgrund des ständigen dem Abwasser-ausgesetzt-Seins besonders defektanfällig. Gerade die zuverlässige Steuerung des Flüssigkeitsstandes in Behältern solcher Kleinkläranlagen kann somit nicht immer gewährleistet sein. Insbesondere die Anordnung von Sensoren im unmittelbaren Bereich des Abwassers kann zu den oben genannten Schwierigkeiten führen. Als Sensoren zur Bestimmung der Füllstandshöhen in Behältern solcher Kleinkläranlagen werden dabei beispielsweise Schwimmschalter in unmittelbarem Behälterbereich eingesetzt. In letzter Zeit wurden auch bereits Versuche unternommen, über die Nutzung von Signalen von Drucksensoren Wasserfüllstände in Behältern von Kleinkläranlagen zu bestimmen und in Abhängigkeit der so bestimmten Werte SBR-Anlagen zu überwachen.

So ist beispielsweise aus der DE 103 56 208 A1 ein Verfahren und eine Vorrichtung zur Überwachung und Steuerung eines Abwasserreinigungsprozesses in Abwasserbehandlungsanlagen, insbesondere in Kleinkläranlagen, bekannt, wobei dort eine Höhenstandsmessung von Abwasser in einem Behälter unter Verwendung wenigstens eines Drucksensors mittels Druckluft durchgeführt wird. Eine zentrale Steuereinheit wertet die so erhaltenen Messwerte aus und steuert die Vorrichtung entsprechend. Jedoch kann bei diesem Verfahren und mit dieser Vorrichtung keine wirklich zuverlässig Wasserstandshöhenmessung in einem Druckluftheber durchgeführt werden, da aufgrund der Verwendung von Druckluft während der eigentlichen Messung zum einen ein Schwanken der Messwerte erfolgt und zum andern leicht eine durch die Druckluft verfälschte Messung auftreten kann.

Außerdem ist bei der bekannten Vorrichtung ein Drucksensor unmittelbar im Bereich von Druckluftleitungen in Verbindung zu einem Verdichter/Gebläse angeordnet, was die erhaltenen Messergebnisse von einem entsprechenden Sensor ungenauer und für Druckschwankungen noch anfälliger macht.

Es ist somit eine Aufgabe der vorliegenden Erfindung, ein Verfahren zum Betrieb eines Drucklufthebersystems für Kleinkläranlagen sowie ein entsprechendes Drucklufthebersystem vorzusehen, welches die Nachteile des Standes der Technik überwindet, insbesondere eine einfache und störungsfreie, jedoch genaue Füllstandshöhenmessung in Behältern einer solchen Kleinkläranlagen bietet. Auch eine Steuerung des Betriebs soll damit zuverlässiger sein.

Die Aufgabe wird erfindungsgemäß gelöst durch ein Verfahren mit den Merkmalen gemäß Anspruch 1 sowie ein Drucklufthebersystem mit den Merkmalen gemäß Anspruch 6. Vorteilhafte Ausführungsformen sind in den jeweiligen Unteransprüchen definiert.

Das erfindungsgemäße Verfahren zum Betrieb eines Drucklufthebersystems für eine Kleinkläranlage, wobei ein Flüssigkeitsfüllstand in zumindest einem Behälter der Kleinkläranlage mit einem Druckluftheber veränderbar ist, weist die folgenden Schritte auf:
Aufbau einer Verbindung einer Druckluftquelle und einer Druckluftzufuhrleitung zu dem Druckluftheber, d.h. bevorzugt Öffnen eines Ventils, welches die Druckluftquelle abtrennbar von dem sonstigen System hält;
Druckaufbau in dem System, bestehend aus der Druckluftzufuhrleitung und dem Druckluftheber, durch die Druckluftquelle;
Abtrennen der Druckluftquelle von dem System;
Bestimmung des Drucks im System durch einen Drucksensor, welcher bevorzugt mittels einer Bypassleitung mit dem System verbunden ist, wobei das System bei Druckbestimmung, wie sich aus dem vorherigen Verfahrensschritt ergibt, von der Druckluftquelle abgetrennt ist, also auch der an das System angeschlossene Druckluftsensor von der Druckluftquelle abgetrennt ist;

Vergleich des mit dem Drucksensor bestimmten Drucks mit einem vorbestimmten Referenzdruck, welcher ein Maß für den hydrostatischen Druck einer Flüssigkeitssäule über einem Anschluss der Druckluftzufuhrleitungen an dem Druckluftheber ist, durch eine Drucklußsteuerung, wobei der Flüssigkeitsfüllstand in dem Behälter bestimmt wird.

Mit dem erfindungsgemäßen Verfahren ist auf einfache und relativ kostengünstige Art und Weise eine zuverlässige Messwerterfassung des Drucks und somit der Füllstandshöhe bei einer Kleinkläranlage möglich. Insbesondere werden durch das vorherige Abtrennen der Druckluftquelle von dem System, in welchem der Druck bestimmt wird, erfindungsgemäß eventuelle Schwankungen und damit verbundene Ungenauigkeiten vermieden, im Gegensatz zu einer andauernd betriebenen Druckbeaufschlagung durch die Druckluftquelle auch während einer Druckmessung.

Um die Zuverlässigkeit der Druckmessung und somit die Zuverlässigkeit der Füllstandshöhenmessung in dem Behälter unter allen Betriebszuständen weiter zu verbessern und zu präzisieren, kann bei dem erfindungsgemäßen Verfahren nach dem Druckaufbau durch die Druckluftquelle ein Warteschritt ausgeführt werden, während dem eine ausreichende Zeitdauer gewartet wird, wobei der Druck im System sich als Gleichgewichtsdruck einstellt.

Hinsichtlich der Steuerung der Kleinkläranlage unter Verwendung des erfindungsgemäßen Verfahrens kann dieses erfindungsgemäße Verfahren dahingehend weiter ausgestaltet werden, dass nach einer Bestimmung des Flüssigkeitsstandes in dem Behälter in Abhängigkeit des Vergleichs, d.h. in Abhängigkeit des Vergleichs des von dem Drucksensor bestimmten Drucks mit einem vorbestimmten Referenzdruck durch die Druckluftsteuerung, ein Reinigungszyklus gestartet wird oder in einen Ferienbetrieb geschaltet wird, bevorzugt durch die Druckluftsteuerung selbst.

Das erfindungsgemäße Verfahren kann dahingehend weitergebildet werden, dass nach einer Bestimmung des Flüssigkeitsstands in dem Behälter in Abhängigkeit des Vergleichs eine Steuerung erfolgt zumindest eines der Schritte aus der folgenden Gruppe, bestehend aus: Beschickung, Belüftung, Absetzung, Klarwasserabzug, Überschussschlammabzug. Dies sind Verfahrensschritte bei Betrieb einer Kleinkläranlage gemäß dem SBR-Verfahren.

Um die Effizienz des erfindungsgemäßen Verfahrens, insbesondere bei weniger stark im Einsatz stehenden Kleinkläranlagen weiter zu verbessern, kann das erfindungsgemäße Verfahren jeweils nach Ablauf einer vorbestimmten Zeitdauer durchgeführt werden, d.h. es wird nach Ablauf einer vorbestimmten Zeitdauer das Verfahren mit den erfindungsgemäßen Verfahrensschritten durchgeführt, worauf dann wieder das System der Kleinkläranlage einen vorbestimmten Zeitraum in Ruhe bleibt und dann nach Ablauf einer vorbestimmten Zeitdauer das erfindungsgemäße Verfahren erneut abläuft.

Die Erfindung betrifft neben dem erfindungsgemäßen Verfahren auch ein erfindungsgemäßes Drucklufthebersystem für eine Kleinkläranlage, wobei alle im Zusammenhang mit dem Verfahren erläuterten Merkmale entsprechend auch im Zusammenhang mit dem erfindungsgemäßen Drucklufthebersystem gelten und umgekehrt.

Das erfindungsgemäße Drucklufthebersystem für eine Kleinkläranlage weist einen Druckluftheber auf, mit welchem ein Flüssigkeitsfüllstand in zumindest einem Behälter der Kleinkläranlage veränderbar ist und eine Druckluftzufuhrleitung, welche an einem Anschluss des Luftdruckhebers angeschlossen ist und welche über ein Ventil mit einer Druckluftquelle verbunden ist. Erfindungsgemäß ist ein System, bestehend aus der Druckluftzufuhrleitung und dem Druckluftheber, und ein Drucksensor, welcher mit dem System in Verbindung steht und mittels welchem der Druck in dem System bestimmbar ist, über das Ventil von der Druckluftquelle abtrennbar und es ist erfindungsgemäß eine Druckluftsteuerung vorgesehen, welche den von dem Drucksensor im abgetrennten System bestimmten Druck mit einem vorbestimmten Referenzdruck vergleicht, welcher ein Maß für den hydrostatischen Druck einer Flüssigkeitssäule über dem Anschluss ist, wobei der Flüssigkeitsfüllstand in dem Behälter bestimmbar ist. Somit ist ein erfindungsgemäßes System mit einem damit in Verbindung stehenden Drucksensor abtrennbar von der Druckluftquelle vorgesehen, wobei die Druckbestimmung ohne störende Einflüsse von der Druckluftquelle erfindungsgemäß ermöglicht ist, was beispielsweise gemäß dem Stand der Technik nicht der Fall ist.

Bei dem erfindungsgemäßen Drucklufthebersystem kann der Druckluftsensor über eine Bypassleitung mit dem System in Verbindung stehen. Dabei ist erfindungsgemäß, wie sich aus dem Obigen ergibt, die Bypassleitung an einem Ort mit dem System verbunden, welcher hinter dem Ventil liegt, so dass ein Abtrennen der Druckluftquelle über das Ventil nicht auch die Bypassleitung von dem System abtrennt.

Besonders bevorzugt kann das Ventil des erfindungsgemäßen Drucklufthebersystems ein Rückschlagventil sein. Damit ist es möglich, dass auf besonders einfache Weise durch Druckaufbau in der Druckluftquelle das Rückschlagventil geöffnet wird und das System (und dem Druckluftsensor) ankoppelt und nach erfolgtem Druckaufbau bei Abschalten der Druckluftquelle sich das Ventil automatisch schließt und die Druckluftquelle somit vom System (und dem Druckluftsensor) abkoppelt. Dies ermöglicht eine besonders einfache Steuerung und einen besonders sicheren und zuverlässigen Betrieb des erfindungsgemäßen Drucklufthebersystems, insbesondere gemäß dem erfindungsgemäßen Verfahren, welches weiter oben beschrieben wurde.

Um verschiedene Druckluftgerätschaften bzw. Drucklufthebersysteme in einem Kleinkläranlagensystem auf einfache Art und Weise gemäß einer Ausführungsform der vorliegenden Erfindung betreiben zu können, kann zwischen dem Druckluftsensor und dem System, bevorzugt zwischen der Bypassleitung und dem System zumindest ein Verteilerventil angeordnet sein. Dieses Verteilerventil kann Druckluftzufuhr zu verschiedenen Drucklufthebern oder anderen Gerätschaften, welche Druckluft benötigen, ermöglichen.

In dem erfindungsgemäßen Drucklufthebersystem kann die Druckluftquelle ein Luftverdichter sein. Auch andere Druckluftquellen, welche geeignet sind, sind denkbar, beispielsweise Gebläse oder Ähnliches.

Um einen Kontakt mit Wasser und somit mögliche Einflüsse, welche zu einer Funktionsstörung des erfindungsgemäßen Drucklufthebersystems führen können, weitestgehend auszuschließen, kann das Ventil und/oder die Druckluftsteuerung außerhalb des zumindest einen Behälters der Kleinkläranlage angeordnet sein.

Auch der Drucksensor kann außerhalb des Behälters angeordnet sein, bevorzugt in der Nähe des Ventils und/oder der Druckluftsteuerung. Der Drucksensor kann auch außerhalb des Behälters in der Druckluftsteuerung angeordnet sein. All dies kann auf einfache Weise die Funktionssicherheit der erfindungsgemäßen Vorrichtung, insbesondere bei Anwendung des erfindungsgemäßen Verfahrens, weiter verbessern, da bei der erfindungsgemäßen Vorrichtung die empfindlichen Sensoren und Regelelemente, wie etwa Ventile, außerhalb des Behälters und somit außerhalb des unmittelbaren Einflussbereichs von Wasser erfindungsgemäß vorgesehen sein können.

Die Erfindung wird im Folgenden beispielhaft anhand der Beschreibung und der beigefügten Figuren in bevorzugten Ausführungsformen näher erläutert werden. Es zeigt:
- Figur 1: eine schematische Ansicht eines Drucklufthebersystems für eine Kleinkläranlage gemäß einer Ausführungsform der Erfindung; und
- Figur 2: eine schematische Ansicht eines Drucklufthebersystems für eine Kleinkläranlage gemäß einer weiteren bevorzugten Ausführungsform der Erfindung.

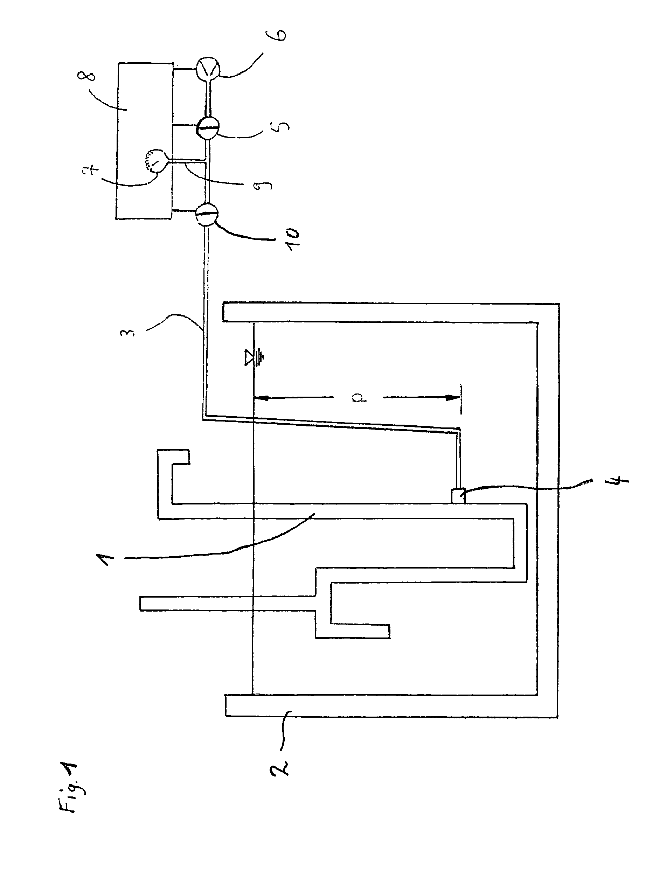

Figur 1 zeigt in einer schematischen Ansicht ein Drucklufthebersystem für eine Kleinkläranlage gemäß einer ersten bevorzugten Ausführungsform der Erfindung.

Über einen Druckluftheber 1, dessen Prinzip dem Fachmann allgemein bekannt ist, so dass es an dieser Stelle nicht näher erläutert wird, ist der Flüssigkeitsstand in einem Behälter 2 einer Kleinkläranlage veränderbar. Der Druckluftheber 1 des erfindungsgemäßen Drucklufthebersystems weist eine Druckluftzufuhrleitung 3 auf, welche an einem Anschluss 4 des Drucklufthebers 1 angeschlossen ist, und welche über ein Ventil 5 mit einer Druckluftquelle 6 verbunden ist. Erfindungsgemäß ist ein System, bestehend aus der Druckluftzufuhrleitung 3 und dem Druckluftheber 1, und ein Drucksensor 7, welcher mit dem System über eine Bypassleitung 9 in Verbindung steht, und mittels welchem der Druck in dem System bestimmbar ist, über das Ventil 5 von der Druckluftquelle 6 abtrennbar. Eine Druckluftsteuerung 8 ist vorgesehen, welche den von dem Drucksensor 7 im abgetrennten System bestimmten Druck mit einem vorbestimmten Referenzdruck vergleicht, welcher ein Maß für den hydrostatischen Druck einer Flüssigkeitssäule (p) über dem Anschluss 4 ist, wobei der Flüssigkeitsfüllstand in dem Behälter 2 bestimmbar ist, da die Höhe des Anschlusses 4 über dem Behältergrund und die Höhe der Flüssigkeitssäule (p) somit bekannt sind. Der Flüssigkeitsfüllstand ergibt sich somit aus der Höhe des Anschlusses 4 über dem Behältergrund addiert mit der aus dem gemessenen Druck bestimmten Höhe der Flüssigkeitssäule (p). Zusätzlich ist zumindest ein Verteilerventil 10 vorgesehen, welches zwischen dem Drucksensor 7 und dem System sich befindet. Die Durchführung des erfindungsgemäßen Verfahrens kann dabei durch die Druckluftsteuerung bzw. Steuerung 8 gesteuert werden.

Gemäß Figur 1 ist die Druckluftquelle 6 ein Luftverdichter. Sowohl das Ventil 5 als auch der Drucksensor 7, die Druckluftsteuerung 8, die Druckluftquelle 6 und das Verteilerventil 10 sind außerhalb des Behälters 2 angeordnet. Gemäß der in Figur 1 gezeigten Ausführungsform ist der Drucksensor 7 außerhalb des Behälters 2 in der Druckluftsteuerung 8 angeordnet. Zwischen der Druckluftsteuerung 8 und dem Ventil 5, der Druckluftquelle 6 und dem Verteilerventil 10 bestehen Funktions- und/oder Datenverbindungen, wobei die Steuerung der genannten Komponente jeweils durch die Druckluftsteuerung 8 erfolgen kann. Der Drucksensor 7 kann auch außerhalb der Druckluftsteuerung 8 angeordnet sein (in Figur 1 nicht gezeigt), wobei dann ebenfalls eine entsprechende Funktions- und/oder Datenverbindung zur Druckluftsteuerung 8 bestehen kann.

Durch das erfindungsgemäße Drucklufthebersystem kann insbesondere das erfindungsgemäße Verfahren zum Betrieb des Drucklufthebersystems für eine Kleinkläranlage Verwendung finden, wobei der Flüssigkeitsfüllstand in dem Behälter 2 bestimmbar ist durch die folgenden Schritte:
Aufbau einer Verbindung der Druckluftquelle 6 mit der Druckluftzufuhrleitung 3 zu dem Druckluftheber 1;
Druckaufbau in dem System, bestehend aus der Druckluftzufuhrleitung 3 und dem Druckluftheber 2 durch die Druckluftquelle 6;
Abtrennen der Druckluftquelle 6 von dem System durch entsprechendes Schließen des Ventils 5, welches beim Schritt des Aufbaus der Verbindung zunächst geöffnet wurde und welches nun geschlossen wird;
Bestimmung des Drucks in dem System durch den Drucksensor 7;

Vergleich des von dem Drucksensor 7 bestimmten Drucks mit einem vorbestimmten Referenzdruck, welcher ein Maß für den hydrostatischen Druck der Flüssigkeitssäule (p) über dem Anschluss 4 der Druckluftzufuhrleitung 3 an dem Druckluftheber 1 ist, durch die Druckluftsteuerung 8, wobei der Flüssigkeitsfüllstand in dem Behälter bestimmt wird durch Addition der Höhe der bestimmten Flüssigkeitssäule (p) und der Höhe des Anschlusses 4 über dem Boden des Behälters 2.

Durch das erfindungsgemäße Verfahren kann eine weitestgehend automatisierte Steuerung der Kleinkläranlage unter Verwendung des Drucklufthebersystems erfolgen.

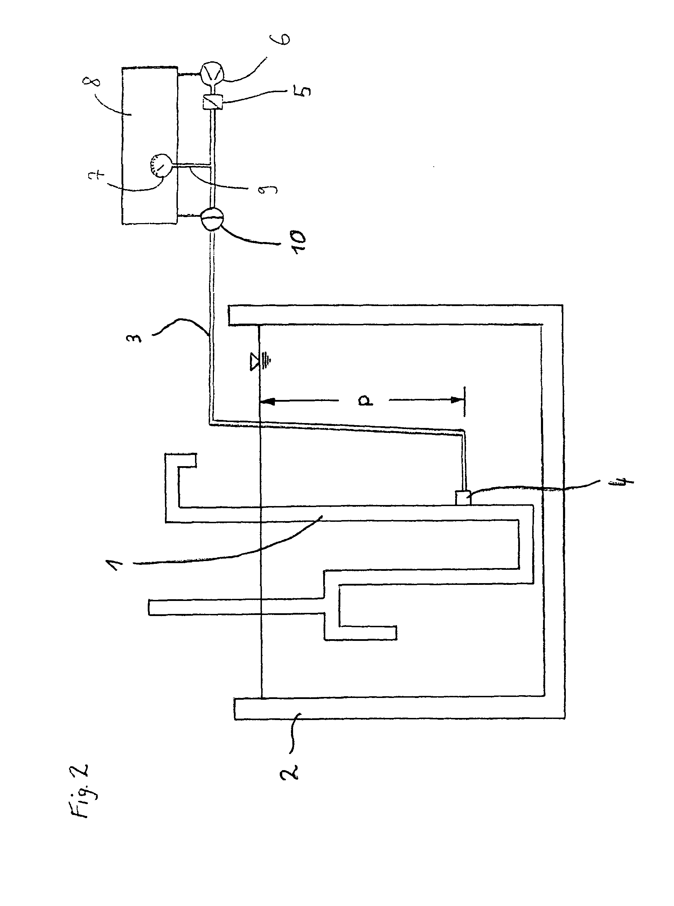

Figur 2 zeigt eine weitere schematische Ansicht eines erfindungsgemäßen Drucklufthebersystems gemäß einer zweiten Ausführungsform der vorliegenden Erfindung.

Die Ausführungsform der Figur 2 unterscheidet sich dabei von der Ausführungsform der Figur 1 lediglich dadurch, dass das Ventil 5, welches in der Figur 1 z.B. ein normales Schieberventil sein kann, in Figur 2 ein Rückschlagventil ist. Ansonsten entsprechen gleiche Bezugszeichen den gleichen Elementen. Auch die sonstige Beschreibung, welche im Zusammenhang mit Figur 1 gegeben wurde, trifft entsprechend, soweit anwendbar, auf die Figur 2 zu.

Die bevorzugte Ausführungsform, welche schematisch in Figur 2 gezeigt ist, hat den Vorteil, dass durch Verwendung eines Rückschlagventils als Ventil 5 einfach durch Anlaufen lassen des Luftverdichters, welcher als Druckluftquelle 6 dient, die Verbindung der Druckluftquelle 6 mit der Druckluftzufuhrleitung 3 zu dem Druckluftheber 1 aufgebaut wird, ohne dass eine spezielle Ansteuerung des Ventils 5 erfolgen muss. Lediglich eine Ansteuerung der Druckluftquelle 6 ist erforderlich, das Ventil 5, welches in dieser Ausführungsform ja ein Rückschlagventil ist, öffnet sich dann quasi automatisch. Dies vereinfacht somit sowohl den konstruktiven Aufwand als auch den steuerungstechnischen Aufwand beim Einsatz des erfindungsgemäßen Drucklufthebersystems und bei Anwendung des erfindungsgemäßen Verfahrens zum Betrieb des Drucklufthebersystems.

Es sei angemerkt, dass sowohl Figur 1 als auch Figur 2 lediglich Ausschnitts weise und schematisch einen Teil einer Kleinkläranlage darstellen, insbesondere können weitere Behälter vorgesehen sein, welche weitere Drucklufthebersysteme gemäß der Erfindung, insbesondere unter Verwendung des erfindungsgemäßen Verfahrens, zur Steuerung solcher Drucklufthebersysteme einsetzen, wobei diese weiteren Drucklufthebersysteme beispielsweise über das Verteilerventil 10 ansteuerbar sein können.

## Patentansprüche

1. Verfahren zum Betrieb eines Drucklufthebersystems für eine Kleinkläranlage, wobei ein Flüssigkeitsfüllstand in einem Behälter mit einem Druckluftheber veränderbar ist, **gekennzeichnet durch** die folgenden Schritte: Aufbau einer Verbindung einer Druckluftquelle und einer Druckluftzufuhrleitung zu dem Druckluftheber;
Druckaufbau in dem System, bestehend aus der Druckluftzufuhrleitung und dem Druckluftheber, **durch** die Druckluftquelle;
Abtrennen der Druckluftquelle von dem System;
Bestimmung des Drucks im System **durch** einen Drucksensor;
Vergleich des von dem Drucksensor bestimmten Druck mit einem vorbestimmten Referenzdruck, welcher ein Maß für den hydrostatischen Druck einer Flüssigkeitssäule über einem Anschluss der Druckluftzufuhrleitung an dem Druckluftheber ist, **durch** eine Druckluftsteuerung, wobei der Flüssigkeitsfüllstand in dem Behälter bestimmt wird.

2. Verfahren nach Anspruch 1, **dadurch gekennzeichnet, dass** nach dem Druckaufbau durch die Druckluftquelle ein Warteschritt ausgeführt wird, während dem eine ausreichende Zeitdauer gewartet wird, wobei der Druck im System sich als Gleichgewichtsdruck einstellt.

3. Verfahren nach Anspruch 1 oder 2, **dadurch gekennzeichnet, dass** nach einer Bestimmung des Flüssigkeitsfiillstands in dem Behälter in Abhängigkeit des Vergleichs ein Reinigungszyklus gestartet wird oder in einen Ferienbetrieb geschaltet wird.

4. Verfahren nach einem der Ansprüche 1 bis 3, **dadurch gekennzeichnet, dass** nach einer Bestimmung des Flüssigkeitsfüllstands in dem Behälter in Abhängigkeit des Vergleichs eine Steuerung zumindest eines der Schritte aus der Gruppe erfolgt, bestehend aus Beschickung, Belüftung, Absetzung, Klarwasserabzug, Überschussschlammabzug.

5. Verfahren nach einem der Ansprüche 1 bis 4, **dadurch gekennzeichnet, dass** das Verfahren jeweils nach Ablauf einer vorbestimmten Zeitdauer durchgeführt wird.

6. Drucklufthebersystem für eine Kleinkläranlage, mit einem Druckluftheber (1) mit welchem ein Flüssigkeitsfüllstand in einem Behälter (2) veränderbar ist, und mit einer Druckluftzufuhrleitung (3), welche an einen Anschluss (4) des Drucklufthebers (1) angeschlossen ist und welche über ein Ventil (5) mit einer Druckluftquelle (6) verbunden ist, **dadurch gekennzeichnet, dass** ein System, bestehend aus der Druckluftzufuhrleitung (3) und dem Druckluftheber (1), und ein Drucksensor (7), welcher mit dem System in Verbindung steht und mittels welchem der Druck in dem System bestimmbar ist, über das Ventil (5) von der Druckluftquelle (6) abtrennbar sind, und eine Druckluftsteuerung (8) vorgesehen ist, welche den von dem Drucksensor (7) im abgetrennten System bestimmten Druck mit einem vorbestimmten Referenzdruck vergleicht, welcher ein Maß für den hydrostatischen Druck einer Flüssigkeitssäule (p) über dem Anschluss (4) ist, wobei der Flüssigkeitsfüllstand in dem Behälter (2) bestimmbar ist.

7. Drucklufthebersystem nach Anspruch 6, **dadurch gekennzeichnet, dass** der Druckluftsensor (7) über eine Bypass-Leitung (9) mit dem System in Verbindung steht.

8. Drucklufthebersystem nach Anspruch 6 oder 7, **dadurch gekennzeichnet, dass** das Ventil (5) ein Rückschlagventil ist.

9. Drucklufthebersystem nach einem der Ansprüche 6 bis 8, **dadurch gekennzeichnet, dass** zwischen dem Druckluftsensor (7) und dem System, bevorzugt zwischen der Bypassleitung (9) und dem System, zumindest ein Verteilerventil (10) angeordnet ist.

10. Drucklufthebersystem nach einem der Ansprüche 6 bis 9, **dadurch gekennzeichnet, dass** die Druckluftquelle (6) ein Luftverdichter ist.

11. Drucklufthebersystem nach einem der Ansprüche 6 bis 10, **dadurch gekennzeichnet, dass** das Ventil (5) und/oder die Druckluftsteuerung (8) außerhalb des Behälters (2) angeordnet ist/sind.

12. Drucklufthebersystem nach einem der Ansprüche 6 bis 11, **dadurch gekennzeichnet, dass** der Drucksensor (7) außerhalb des Behälters (2) angeordnet ist, bevorzugt in der Nähe des Ventils (5) und/oder der Druckluftsteuerung (8).

13. Drucklufthebersystem nach einem der Ansprüche 6 bis 11, **dadurch gekennzeichnet, dass** der Drucksensor (7) außerhalb des Behälters (2) in der Druckluftsteuerung (8) angeordnet ist.
